# EUROPEAN PATENT APPLICATION

(11) **EP 1 158 714 A2**
(43) Date of publication of application: **28.11.2001**
(21) Application number: 01440126.9
(22) Date of filing: 07.05.2001
(51) Int. Cl.: H04J 14/02

(54) **Method and system for dynamic control of wavelength allocation and directionality on network links**

(30) Priority: 23.05.2000 US 576280
(71) Applicant: ALCATEL, 75008 Paris (FR)
(72) Inventor: Cankaya, Hakki C., Dallas, Dallas County, Texas 75206 (US); Xiong, Yijun, Plano, Collin County, Texas 75025 (US); Vandenhoute, Marc L.J., Dallas, Denton County, Texas 75287 (US)
(74) Representative: Dreiss, Fuhlendorf, Steimle & Becker

(57) **Abstract**

A method and system are disclosed for dynamic wavelength allocation on a network link connected between network nodes, the link comprising one or more fibers, and having one or more data channel groups, each having at least one channel. The method comprises the steps of: exchanging bootstrap information between control units at each end of the link to determine the initial configuration of channels within bi-directional data channel and bi-directional control channel groups; negotiating, at the control units, the initial directionality of channels in the bi-directional channel groups; measuring traffic intensity on the link at a traffic measuring module at each link end to generate a link traffic signal; forwarding the link traffic signal to a channel control system; receiving at the control units information from neighbor nodes; processing the link traffic signal and neighbor node information; reallocating the directionality of one or more channels in the bi-directional data and control channel groups based on the processing results; and repeating the measuring, receiving, processing and reallocating steps continuously to control data and control channel group capacity in each direction along the link.

## Description

### TECHNICAL FIELD OF THE INVENTION

The present invention relates generally to optical network systems and methods and, more particularly, to a system and method for dynamic control of wavelength allocation and directionality on network links.

### BACKGROUND OF THE INVENTION

Data traffic on networks, particularly on the internet, has increased dramatically over the past several years, and this trend will continue with the introduction of new services that require more bandwidth. The dramatic increase in network traffic is leading to a realization that the equipment lines in corporate networks, and in router capacity itself, may not keep up with the demand for more bandwidth. The large volume of network traffic requires a network with high capacity lines and routers capable of routing data packets with variable lengths and bursty arrival.

Current electronic IP switching routers will become difficult, if not impossible, to scale with the increase in IP traffic. Optical data packet switching routers can overcome the difficulties in electronic routers. In particular, the emergence of dense wavelength division multiplexing (DWDM) technology has significantly increased the theoretical capacity of fiber optic transmission systems. A single DWDM optical fiber can carry in excess of 10 terabits of data per second. However, the exploitation of this expanded capacity is very often highly inefficient, as most wavelength allocation schemes reflect an outdated notion that transmission capacity needs to be allocated symmetrically in both directions along a link.

Recent studies have indicated that typical data traffic patterns on internet intra-spatial links, and in networks in general, are very asymmetric, whether these links are WDM links or classical transmission links. For example, in the early portion of the day, most traffic might be in one direction (e.g., east to west). Later in the day, a completely opposite pattern may occur. Ratios have been observed on the order of 1:5 or 1:3 in terms of fluctuations over the period of a day. These fluctuations are time-dependent, and the time granularity typically is in the order of hours, or perhaps even days, with some fluctuations seen only over a much larger time basis. Huge amounts of transmission capacity are thus left unutilized because capacity provisioning typically occurs on the basis of twice the maximum required capacity in either direction, instead of on the sum of bidirectional traffic.

Because of the symmetrical provisioning of classical transmission systems, the system is always at switch capacity in one direction, but not in the other. This essentially means that at relatively small traffic volume, a great amount of the switch capacity is being wasted. Current transmission systems do not provide a means by which this wasted switch and link capacity can be reallocated, as needed, in an asymmetrical fashion to permit matching of transmission capacity with actual traffic routing in either direction.

A WDM system typically has tens, and perhaps even hundreds, of wavelengths for data transmission that could theoretically be allocated to carry traffic in either direction. Classical transmission systems cannot take advantage of underutilized wavelengths in one direction to increase capacity in the other, perhaps overloaded, direction. Thus, differences in data traffic volume between the two directions along a link cannot be compensated for with current classical transmission systems, leading to under-utilization of transmission capacity at different points in time along one, or both, directions of traffic flow.

While this problem is somewhat acknowledged in static optical transmission systems (e.g., optical cross-connects), the problem becomes more acute as the emergence of optical switching techniques require a very dynamic allocation of wavelength (channel) resources. Indeed, the efficiency (i.e., blocking probability of a WDM access technique) of some optical switching techniques is dependent on the number of available channels at the egress port. A transmission scheme, therefore, that can allocate wavelengths to allow for asymmetric traffic patterns might yield significant efficiency benefits in an optical switch solution, in particular, and generally in any switching solution.

The symmetrical wavelength allocation of current transmission systems results in a capacity allocation that is two times the maximum capacity that the system will need in either direction. Therefore, each direction is allocated the maximum capacity the system is likely to see in any one direction. In such a scheme, channels in either direction are likely to be greatly underutilized on a regular basis. In contrast, an asymmetrical allocation of transmission channels (wavelengths) that can be dynamically configured could result in either an increase in traffic capacity for the same number of channels, or in a decrease in the number of channels required to carry a given traffic volume. For example, instead of allocating two times the maximum capacity of either direction to a link, the sum of the capacities for both directions could be allocated, which is likely to be less than two times the maximum. This benefit can exist even for classical non-WDM transmission systems.

In particular, in the optical switching area (essentially a WDM domain), minimizing the ingress blocking of packets is required. If at some point a system has 10 wavelengths available and there are 11 packets that need to be sent out simultaneously along a link, there is no capacity available for the eleventh data packet. The eleventh data packet will have to be buffered (shifted in time), or dropped if there is no buffer available or all available buffers are full. Therefore, the more wavelengths that are available to a system, the more packets that can be sent out simultaneously on a given link. Dynamic directionality management of wavelength resources along a link could provide a means to increase the number of wavelengths on a given link, at a given time, in a given direction, on which data packets could be shifted out to the next node. This could be accomplished by, for example, shifting wavelengths from one direction (of under-utilized capacity) to the other direction, where capacity is lacking. Current transmission systems do not have the ability to reflect the asymmetry that is actually occurring in the traffic volume to the provisioning of transmission resources in the WDM domain.

While the asymmetric nature of typical data traffic has been recognized before, the application of DWDM technologies in building data network infrastructures is fairly recent. Although some commercial solutions allow for the static asymmetric configuration of wavelength directionality, current transmission systems do not draw explicit conclusions from observed traffic patterns into designing asymmetric WDM systems with dynamic directionality control. Existing solutions, in fact, are only applicable to static optical transmission systems (i.e., interconnection of optical cross-connects) and do not cater to the specific benefits that a dynamic directionality control system might bring to small granularity time domain optical switches. Existing schemes allow only for static reconfiguration (i.e., no signaling is employed to dynamically control the directionality of data transmission).

### SUMMARY OF THE INVENTION

Therefore, a need exists for a method and system for control of wavelength allocation and directionality in a network link that can asymmetrically allocate transmission channels to reduce or prevent the under-utilization of transmission capacity in either direction along a link.

A further need exists for a method and system for controlling wavelength allocation and directionality in a network link that can dynamically allocate wavelength resources to minimize ingress blocking of data packets at an optical switch.

An even further need exists for a method and system for control of wavelength allocation and directionality on network links that can dynamically resolve disparities between traffic capacity and actual traffic volume on a link and reconfigure the link on a continuous basis.

A still further need exists for a method and system for control of wavelength allocation and directionality on network links that can allocate wavelength transmission resources such as to either increase traffic capacity on an existing link or reduce the number of wavelengths required to carry the same traffic volume on a new link.

The present invention provides a method and system for wavelength allocation on a network link, the link comprising one or more fibers, connected to at least one node, and having one or more data channel groups, each having at least one channel. The system comprises: a bi-directional data channel group for carrying traffic data along the link; a bi-directional control channel group for carrying signaling information, further comprising at least one meta-control channel in each link direction for exchanging bootstrap information; a control unit at each end of the link for receiving information from neighbor nodes and determining the initial configuration of channels within the bi-directional channel groups; a traffic measuring module at each link end for measuring traffic intensity on the link and generating a link traffic signal; a channel control system at each link end for processing the link traffic signal and the neighbor node information, and for reallocating the bi-directional data and control channel groups based on this processing; and at least one transmitter and receiver pair for each data and control channel to enable communication between the ends of the link. The system can further comprise one or more fixed data and control channel groups.

The method of this invention comprises the steps of: exchanging bootstrap information between control units at each end of the link to determine the initial configuration of channels within the bi-directional data channel group and the bi-directional control channel group; negotiating at the control units the initial directionality of channels in the bi-directional channel groups; measuring traffic intensity on the link at the traffic measuring module at each link end to generate a link traffic signal and forwarding the link traffic signal to a channel control system; receiving at the control units information from neighbor nodes; processing the link traffic signal and neighbor node information; reallocating the directionality of one or more channels in the bi-directional data and control channel groups based on the processing results; and repeating the measuring, receiving, processing and reallocating steps continuously to control data and control channel group capacity in each direction along the link.

The present invention provides an important technical advantage of a method and system for control of wavelength allocation and directionality in a network link that can asymmetrically allocate transmission channels to reduce or prevent the under-utilization of transmission capacity in either direction along a link.

The present invention provides another technical advantage by providing a method and system for controlling wavelength allocation and directionality in a network link that can dynamically allocate wavelength resources to minimize ingress blocking of data packets at an optical switch.

The present invention provides yet another technical advantage by providing a method and system for control of wavelength allocation and directionality on network links that can dynamically resolve disparities between traffic capacity and actual traffic volume on a link and reconfigure the link on a continuous basis.

The present invention provides yet another technical advantage by providing a method and system for control of wavelength allocation and directionality on network links that can allocate wavelength transmission resources such as to either increase traffic capacity on an existing link or reduce the number of wavelengths required to carry the same traffic volume on a new link.

### BRIEF DESCRIPTION OF THE DRAWINGS

For a more complete understanding of the present invention and the advantages thereof, reference is now made to the following description taken in conjunction with the accompanying drawings in which like reference numerals indicate like features and wherein:
FIGURE 1 shows a reference model for the allocation and directionality of DWDM channels;
FIGURE 2 is a graph illustrating the benefit of increasing channel counts to lower the discard probability at an egress link;
FIGURE 3 is a block diagram of one embodiment of the system of the present invention; and
FIGUREs 4A, 4B and 4C illustrate one example of the linear efficiency gains resulting from active directionality wavelength management according to the teachings of the present invention.

### DETAILED DESCRIPTION OF THE INVENTION

Preferred embodiments of the present invention are illustrated in the FIGURES, like numerals being used to refer to like and corresponding parts of the various drawings.

The method and system of the present invention use a signaling protocol, transported over a dedicated control channel (group), to allow for the temporal alternation of directionality of data transmission on a selected subset of channels. Hence, using traffic pattern analysis, the channel configuration of individual WDM links can be dynamically adjusted (in time) to reflect the (shifting) asymmetric nature of traffic patterns. The present invention can be implemented on WDM and DWDM systems.

The following description of the present invention postulates a specific channel configuration that is particular to optical burst switches. Channel directionality management can, however, be valuable in a broader class of optical cross-connect switching devices, and the present invention can be implemented in such devices. The present invention can be implemented using a combination of software and hardware. Existing network routers can be upgraded to include the present invention with the installation of software and some modification of hardware, or by the use of intermediate equipment incorporating this invention.

The present invention can provide for dynamic directionality management of wavelengths (channels) on a link-by-link basis. However, the overall traffic scheme of the network is taken into account. In general, all of the traffic going into a node having more than one link eventually has to come out of that node. The total number of wavelengths from all the links going into a node will thus be more or less the same as the total number of wavelengths going out of a node. On a global basis of all such nodes, this must hold true. On an individual link, however, the method and system of the present invention can dynamically allocate directionality of data channels to allow for shifting of wavelengths from input to output (incoming and outgoing).

The method and system of the present invention provide for an initial allocation of wavelengths (channels), along a link or group of links, that is not dependent on the observed traffic flow. During this "bootstrap" phase, channels can be allocated in a manner that may not reflect actual traffic conditions. The allocation pattern can be random, or some predetermined allocation. The present invention can use an algorithm to perform this initial allocation. For example, the initial allocation might be either perfectly symmetrical (one-half of all available channels in each direction) or some other arbitrary pattern.

As part of the initial allocation of channels, some channels (wavelengths) will have a specific role, in that they will be a specific subset of channels allocated to control information. Among the subset of control channels, there will be a group of channels for bootstrap, or meta-control channels, that are used to exchange information between the nodes at either end of a link. Meta-control channels can be used to carry signaling information for the initial allocation of channels, and for any subsequent dynamic channel allocations.

Control channel groups can be static groups for the exchange of control information. Once initial communication is established along the control channels between any two nodes, the nodes can negotiate the allocation of channels along the link(s) connecting them.

The method and system of the present invention can be used for statistical switching on a non-hard-wired switching matrix. The difference between a TDM (time domain multiplexing) system, which uses a statistically configured switching matrix, and the dynamic switching system of the present invention, which can allocate transmission resources over time on a logical basis, is essentially that the channels of the static system are not shifting on a frequent basis. Static optical transmission systems are typically systems that carry TDM traffic, which permits the static and symmetric allocation of wavelength resources. The present invention, however, allows for a much more dynamic allocation of resources that is more data oriented and provides more flexibility in the allocation of network capacity.

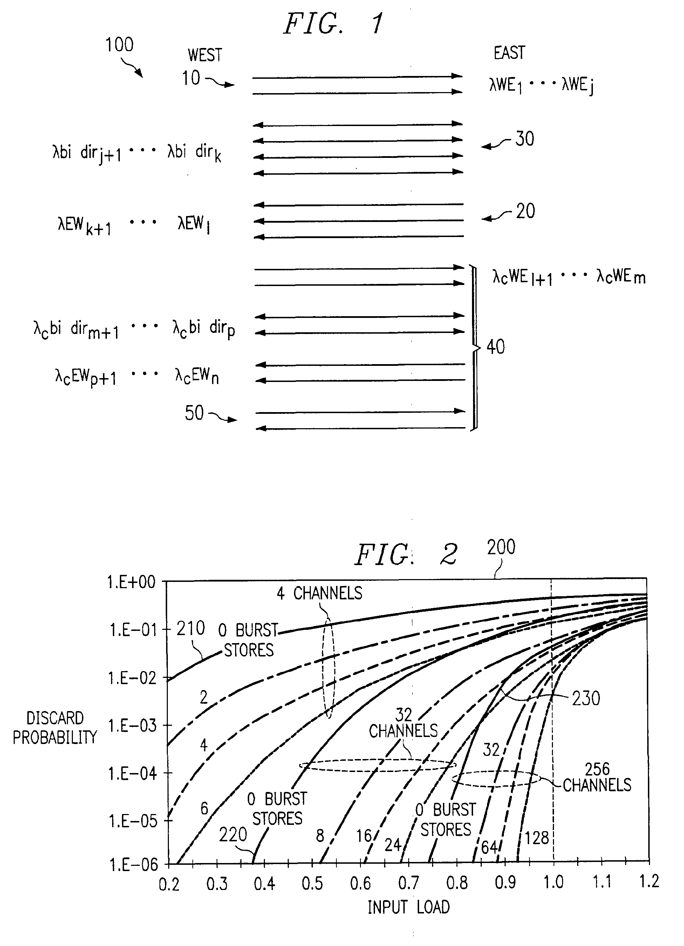

FIGURE 1 shows a reference model 100 that is assumed for one embodiment of the present invention for allocation of directionality of DWDM channels (wavelengths). In FIGURE 1, East and West are used as generic indicators of directionality (i.e., an East/West (EW) label indicates one direction, and a West/East (WE) label the opposite direction). The reference model of FIGURE 1 calls for channels along a link to be split into a control group and three other groups. The first group, group 10, comprises a set of channels that will only be used, for example, from the West to East direction. A second group, group 20, of channels comprises a group of channels that will only be used in the East to West direction. Fixed data channel groups 10 and 20 can consist of zero channels, but will usually have at least one channel (i.e., the number of channels in fixed data channel groups 10 and 20 can be any number between zero and one less than the total number of wavelengths available). The third group of channels is bi-directional data channel group 30, which comprises channels that can dynamically change direction. Bi-directional data channel group 30 can have any number of channels greater than or equal to one.

Like the data channel groups, the control channel group 40 can include fixed and bi-directional control channel groups, as shown in FIGURE 1. Signaling information can be carried on the control channel group 40. Control channel group 40 can be implemented in several ways, including dedicated control wavelengths, which are separate from data wavelengths, or by a subcarrier transmission technique, wherein control data is multiplexed on the traffic data wavelengths.

In general, at least one channel in each direction will be dedicated to control channel group 40 and hence will be unavailable for the transport of non-control data. This is because control channel group 40 of FIGURE 1 must provide for bi-directional communication. Control channel group 40 can also carry other control information, unrelated to the directionality management of the channels. Control channel group 40 can be provisioned in an asymmetrical way, as the amount of (other) control traffic may reflect the asymmetry observed on the traffic data wavelengths.

Within each control channel group 40, there exists at least one meta-control channel 50 in each direction. Meta-control channels 50 can be pre-configured and must be known to both ends of a WDM link. Meta-control channels 50 are used to exchange bootstrap information for the wavelength allocation and directionality control system of the present invention.

Hence, for an n-wavelength DWDM system like that shown in FIGURE 1, and assuming the control channels are implemented with dedicated control wavelengths, the method and system of the present invention can provide for the following allocation of channels:
λ^{WE}₁ .. λ^{WE}ⱼ : fixed data channel group allocated in the West-East direction
N^{WE} = j : number of fixed data channels allocated in the West-East direction; N^{WE} can be O;
λ^{bidir}ⱼ₊₁ .. λ^{bidir}ₖ: bi-directional data channel group
N^{bidir} = k - j : number of bi-directional data channels; N^{bidir} is typically ≥ 1;
λ^{EW}ₖ₊₁ .. λ^{EW}₁: fixed data channel group allocated in the East-West direction
N^{EW} = 1 - k : number of fixed data channels allocated in the East-West direction; N^{EW} can be 0;
λ_{C}^{WE}₁₊₁ .. λ_{C}^{WE}ₘ: control channel group allocated in the East-West direction
N_{C}^{WE} = m - 1 : number of control channels allocated in the West-East direction; N^{WE} is typically ≥ 1, but can be 0, if a subcarrier technique is being used for exchange signaling;
λ_{C}^{bidir}_{M+1} .. λ_{C}^{bidir}ₚ : bi-directional control channel group
N_{C}^{bidir} = p - m : number of bi-directional control channels; N_{C}^{bidir} is typically ≥ 1;
λ_{C}^{EW}ₚ₊₁ .. λC^{EW}ₙ : control channel group allocated in the East-West direction
N_{C}^{EW} = n - p : number of control channels allocated in the East-West direction; N^{EW} is typically ≥ 1, but can be 0, if a subcarrier technique is being used for exchanging signaling.

In this description of the present invention, the term "channels" is used as an abstraction of wavelengths. No assumption is made about the mapping of channels onto physical wavelengths and physical fibers. In essence, the dynamic directionality solution of this invention could be expanded to encompass switch-over of all or a subset of the wavelengths available on multiple fibers. This might entail optimizing control by having the control channels in a subset of fibers carry all the protocol information necessary to control the switch-over of all the wavelengths in all the fibers.

The use of channels is a logical concept. Physically, the channels can be mapped onto a wavelength in a fiber. The method and system of the present invention is equally applicable to the allocation of a number of wavelengths in a single fiber or a number of wavelengths over different fibers. The system and method of this invention can be implemented on a purely logical basis. Channels can then be mapped onto wavelengths and wavelengths onto fibers. A capacity management system such as the present invention is best explained using the logical concept of channels. For example, one of the implications of doing a physical mapping of logical channels onto wavelengths in fibers is that wavelengths on the same fiber can be allocated in different directions.

Within the specific realm of optical switching systems based on wavelength domain statistical multiplexing, dynamic wavelength directionality provided by the present invention is of particular benefit. Indeed, the blocking probability in a wavelength domain multiple access network depends in a non-linear fashion on the number of available wavelengths on the egress link. This is illustrated by the diagram shown in FIGURE 2.

FIGURE 2 is a graph illustrating the benefit of increasing channel count to lower the discard probability when performing statistical multiplexing using wavelength domain medium access (the additional burst store curves are of no relevance to the present invention). Graph 200 shows curves 210, 220 and 230 representing an egress link with 4, 32 and 250 channels, respectively.

As shown in FIGURE 2, a mechanism to increase the number of available wavelengths on a heavily loaded egress link yields, beyond the obvious advantage of linear capacity increase, the added benefit of a super-linear efficiency increase (through lower statistical multiplexing discard probabilities) of the wavelength domain multiple access mechanism.

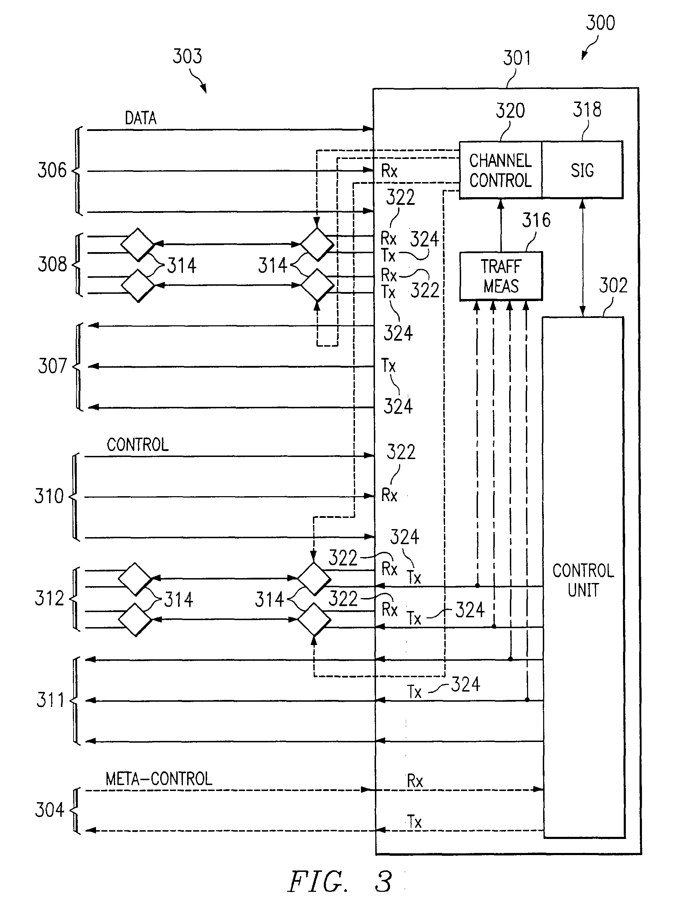

FIGURE 3 is a block diagram of one embodiment of the method and system for control of wavelength allocation and directionality of the present invention. The embodiment in FIGURE 3 shows a generic optical switch 300, which includes a switching matrix 330, control system 340 and link terminal 301. Optical switch 300 interfaces with data channels 306, 307 and 308, with control channels 310, 311 and 312 and with meta-control channels 304. The exact internal operating principles of the switching matrix 330 and the control system 340 are not central to this invention.

The switching matrix 330 is configured by switch control system 340, which operates on the basis of control information exchanged on control channels 310, 311 and 312. Observation of the outgoing control channel groups (fixed control channel group 311 and outbound 312) yields accurate indicators of the traffic flow on fixed data channel groups 307 and outbound channels 308. For a given direction, an instantaneous positive correlation exists between the amount of data exchanged on data channels and control channels.

Data channels 306, 307 and 308 terminate at optical switching matrix 330. Control channels 310, 311 and 312 terminate at control system 340. Bi-directional data channels 308 and bi-directional control channels 312 transition through directionality switches 314. Outbound control channels 311 and outbound 312 transition through Directionality Control Unit ("DCU") 302. All control channels (310, 311 and 312) transition through Signaling Module 318, which process signaling information received from neighboring nodes on inbound control channels (310 and inbound 312/304) and provides it to DCU 302. Signaling Module 318 also allows the injection on outbound control channels (311 and outbound 312/304) of signaling messages emanating from DCU 302 to a neighboring node's DCU 302. Meta-signaling messages on meta-control channels 304 are terminated in the Signaling Module 318. All data channels (306, 307 and 308), control channels (310, 311 and 312), and meta-control channels (304) are considered part of link 303.

DCU 302 is used to determine the initial channel configuration along link 303 and to negotiate the initial directionality of bi-directional data and control channels 308 and 312. Traffic measurement module 316 monitors the control traffic intensity on outbound (East-to-West) bi-directional control channel group 312 and on East-to-West fixed control channel 311 to determine a value for the intensity of data traffic flow on data channel groups 307 and 308. The measured traffic information is fed by traffic measuring module 316 to DCU 302. DCU 302 also receives, from signaling module 318, analogous traffic information from neighboring nodes. One or more control channels can be used to exchange information with neighboring nodes.

DCU 302 takes as input the measurement of outbound traffic along link 303 and traffic information from neighboring nodes to determine if a significant asymmetry exists between the outbound traffic of the nodes at either end of link 303. If so, DCU 302 can negotiate a reallocation of directionality of data and/or control channels. Channel control system 320 can execute the changes submitted by DCU 302 in directionality of bi-directional control and data channels 308 and/or 312 by use of directionality switches 314. Directionality switches 314 can be a circulator, as known to those familiar with the art. Receivers 322 and transmitters 324 are used, in a manner well known in the art, to receive and transmit data and/or control information, respectively. Transceiver units can also be used.

Receivers 322, transmitters 324, channel control system 320, signaling module 318, traffic measuring module 316 and DCU 302 can be contained within a optical switch 300.

In operation, the system of FIGURE 3 can continuously perform dynamic channel directionality management as follows. During a bootstrap phase, DCU 302 on either end of a link 303 can determine the initial channel configuration for the link (including the identification and number of bi-directional channels in the data and control groups). Subsequently, DCU 302 can negotiate the initial directionality of the allocated bi-directional data and control channels. Preconfigured meta-control channels 304 are used to carry the necessary protocol data units (bootstrap information). Once channels are allocated and their directionality set, data traffic flow can commence. Data and control channel groups 306, 307, 308, 310, 311, 312 and 304 are analogous to channel groups 10, 20, 30, 40 and 50 of the reference model shown in FIGURE 1.

Traffic measurement module 316 monitors the traffic intensity on bi-directional control channel group 312 and East/West control channel group 311, as discussed above. This information is forwarded to DCU 302. DCU 302 also receives traffic information from neighboring nodes via signaling module 318. DCU 302 processes both the traffic information from neighboring nodes and the traffic measurement information received from traffic measurement module 316 (on a per-link basis) and, if an asymmetry is diagnosed, can negotiate a reallocation of directionality of data and/or control channels. The degree of asymmetry that must be detected in order to initiate a directionality reallocation can be pre-set within the system. The level of asymmetry necessary to initiate a shift in directionality is arbitrary and can be determined by the degree of system performance desired. For example, a degree of asymmetry equal to the capacity of one channel could be used.

Upon agreement between DCU's 302 at either end of link 303, appropriate coordinated changes can be implemented (including switching between receiver and transmitter configurations on targeted channels, including on intermediate regenerators). Data transmission on the targeted channels is interrupted during this switch-over for a period of time on the order of microseconds to seconds. The process of traffic measurement, comparison to neighboring node traffic information, and reallocation of directionality, if necessary, can be repeated on a regular basis, resulting in continuous adjustment of the data and/or control channel group capacity in each direction along link 303.

DCU 302 compares outgoing traffic from the node at its end of link 303 to outgoing traffic from a node at the other end of link 303. DCU 302 determines if there is a discrepancy in terms of symmetry of outbound traffic and then decides if the direction of some of the wavelengths in bi-directional data channel group 308 (and/or control group 312) can be switched. The switching of channels from one directionality to another along link 303 can be accomplished gradually, or in a rapid manner. The transition will usually not be accomplished instantaneously. The system of this invention can observe the total averages of traffic over a set period of time and, if traffic is shifting in one direction or the other, the system will, at some degree of asymmetry, determine that a change is necessary. The change in traffic patterns occasioning a shift can occur over a span of hours, or perhaps even days.

Traffic measurement module 316 can be any type of system, as known to those in the art, for measuring data traffic over a WDM network. Traffic measurement model 316 of the method and system of this invention measures control data traffic, as opposed to measuring actual data traffic flow, because it is very difficult to measure data traffic at a low physical level in a network. Often, when idle frames are transmitted among real data traffic for various purposes at a low physical level, it is very difficult to distinguish between real traffic and these idle frames. Therefore, traffic measurement in a network is typically done at a higher protocol level. Traffic measurement module 316 of the present invention can represent a traffic measurement function somewhere in the nodes of a network within which the present invention is implemented. Network traffic measurement techniques are well known to those in the art.

In the optical burst switching environment, such as that shown in FIGURE 3, there is a specific way in which data traffic can be measured. In optical burst switches, the burst header packets on the control channels can be measured and an extrapolation performed to determine the amount of real data traffic. The method and system of the present invention can be implemented using software, hardware, or both. The dynamic asymmetrical switching of this invention can be implemented in each of the nodes of a network. Thus, on either end of a link 303, an embodiment of this invention such as that shown in FIGURE 3, can be mirrored to accomplish dynamic asymmetrical switching per the teachings of this invention.

When channel control system 320 determines that a switch in directionality is necessary, the dynamic asymmetrical switching of the present invention can result in a slight loss in efficiency during the switching itself. This is because, during the switch, the wavelengths (channels) whose directionality is being changed cannot be used to carry traffic. Traffic on those channels must be stopped, the switch accomplished, and then traffic transmission restarted. However, because the switching is typically accomplished in a time period of milliseconds to seconds, over a period of a day, the loss caused by switchovers is usually negligible.

The actual switching can be performed by directionality switches 314, under the direction of channel control system 320. One example of a directionality switch is a component called a circulator. As discussed, the function performed by a circulator is well known to those skilled in the art. Directionality switches 314 allow for the switching of traffic flow directions along bi-directional channels within link 303.

In an optical burst switching environment, data channels and control channels are separated as shown in FIGURE 3. Typically, the level of traffic carried along data channels is hard to measure. The level of traffic along data channels 306, and 308, however, can be deduced based on the level of control flow along control channels 311 and 312, as discussed above. Once the data traffic flow is determined, DCU 302 can decide whether any asymmetry in incoming and outgoing traffic requires a switchover of bi-directional data channels 308 and/or bi-directional control channels 312.

Although data traffic flow along data traffic channel groups 306, 307 and 308 is very difficult to measure, control traffic flow along control channel groups 310, 311 and 312 can be observed closely, and from this traffic measurement, data traffic flow can be determined. There is a level of symmetry between the volume of data on control channel groups 310, 311, 312 and along data channel groups 306, 307 and 308. If there is a large amount of control channel traffic in any one direction, it typically implies that there is also a large level of data channel traffic in the other direction.

When a decision is made by channel control system 320 to switch over some capacity from East/West to West/East (or vice versa), the switchover is implemented in both the data channels and the control channels. While a switchover could be implemented individually between control and data channels, it is preferred to switch over both data and control channels, according to their positive correlation. Therefore, although traffic measurement is performed only on the control channels, any directionality switching decisions are implemented on some or all of both data channel groups 306, 307 and 308 and control channel groups 310, 311 and 312.

Traffic measurement module 316 can be a mix of hardware and software that is likely to be implemented as part of one or multiple ports in the switch control system 340. Traffic control module 316 can be located remotely from switching matrix 330.

Returning now to FIGURE 3, during the initialization stage (bootstrap phase), DCU 302 exchanges information with the corresponding DCU 302 of neighboring node(s) via meta-control channels 304. A meta-control channel 304 is required in each direction so that DCU's 302 between neighboring nodes can exchange information. Once DCU 302 of optical switches 301 at each end of link 303 have decided upon the initial allocation and directionality of control and data channels, this information is forwarded to channel control system 320. The initial allocation and directionality choices occur at the initial boot-up phase for link 303 and can also occur whenever link 303 and its channels (wavelengths and fibers) are being re-configured. Link 303 can comprise multiple optical fibers. Once the initial directionality and allocation is established, traffic flow can commence along link 303.

Channel control system 320 can thus be initially configured by DCU 302 in cooperation with other DCUs of neighboring nodes. Following the commencement of traffic flow along link 303, traffic measuring module 316, in combination with SIG 318, provides traffic flow information to DCU 302 to maintain and control the most efficient allocation of channels along link 303. As previously discussed, traffic measuring module 316 only measures outbound control traffic from switch control system 340. The traffic flow received by this optical switch 300 is measured by the neighboring node on the other end of link 303, in the same manner. Neighboring nodes can communicate over control channels 310, 311 and 312 to exchange traffic information. Traffic measuring device 316 can thus compliment a mirror traffic measuring device 316 in a neighboring node at the other end of link 303.

Traffic information from neighboring nodes received by SIG 318 is forwarded to DCU 302 for processing. DCU 302 includes an algorithm, which can be any algorithm as known to those in the art, such as a hysterisis system, that can determine if a discrepancy larger than a set threshold exists between the amount of outbound traffic from optical switch 300 and the amount of inbound traffic received at optical switch 300. If such a discrepancy exists, channel control system 320 can shift the directionality of one or more channels from one direction to the other direction, by providing configuration commands to channel control unit 320 .

The local DCU 302, and the DCU 302 in a neighboring node at the other end of link 303, must agree before a reallocation of data and/or control channels is effectuated. This agreement can be accomplished after either DCU 320 at either end of link 303 first determines that a threshold discrepancy exists between incoming and outgoing data traffic. The decision to switch is communicated to the other end of link 303, and, once confirmation is received, a switch can be effectuated. These communications can occur over control channel groups 310, 311 and 312 between DCU 302, through SIG 318.

For example, the DCU 302 at one end of link 303 might come to the conclusion to effectuate a dynamic reallocation of channels prior to the DCU 302 at the other end, and take the initiative to initiate the change. One embodiment of the present invention could include designating one DCU 302 at one end of link 303 as a master DCU system, and the DCU 302 at the other end of link 303 as a slave DCU system. The master DCU system 302 could then initiate the change in directionality of one or more data and/or control channels.

Alternatively, an embodiment of the present invention could instead designate the master by default as the first DCU 302 to make the decision to switch. Master and slave DCU 302 could thus alternate between the ends of link 303. The first DCU 302 to conclude that reallocation of channel resources is needed could communicate this decision to the other DCU 302. When both DCUs 302 conclude that a reallocation is necessary, the switch occurs.

The first DCU 302 to make the decision to reallocate channel resources can decide which channel resources directionality to change. The optical switches 300 at either end of link 303 cease sending traffic along the data and control channels that have been designated to change directionality until the switchover is complete. Switch control system 340 can also place offline a channel connected to the switched matrix.

Traffic along any data and control channels whose directionality is being switched can be rerouted to remaining channels whose traffic has not been interrupted. Once the channel switch is complete, traffic can resume in the new direction along the switched channels and traffic volume is redistributed along all available channels. The temporary loss of part of the capacity of link 303 is well known as a classical signaling problem that occurs in most communication systems when switching channels.

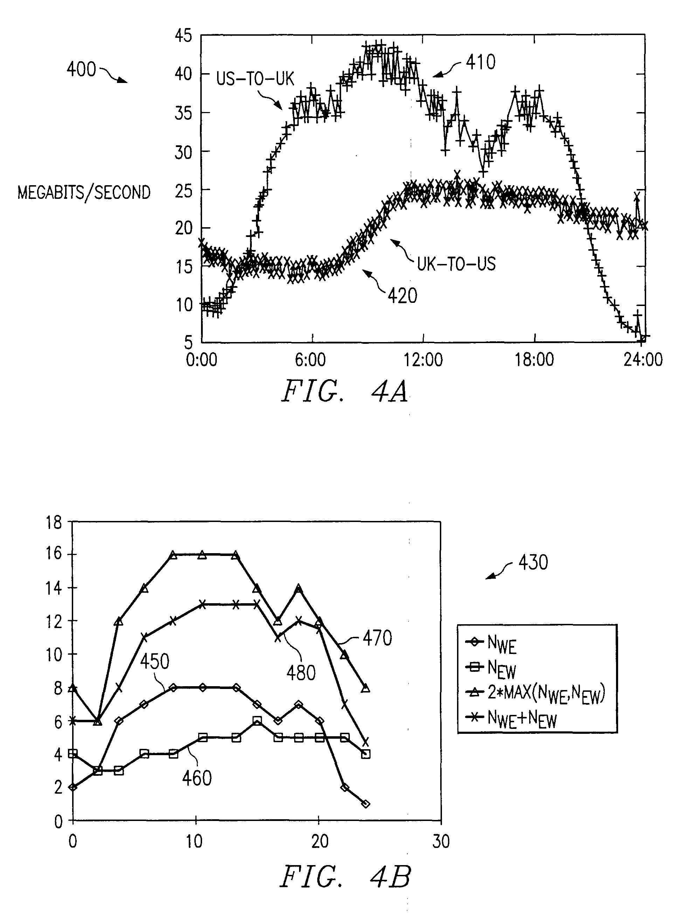

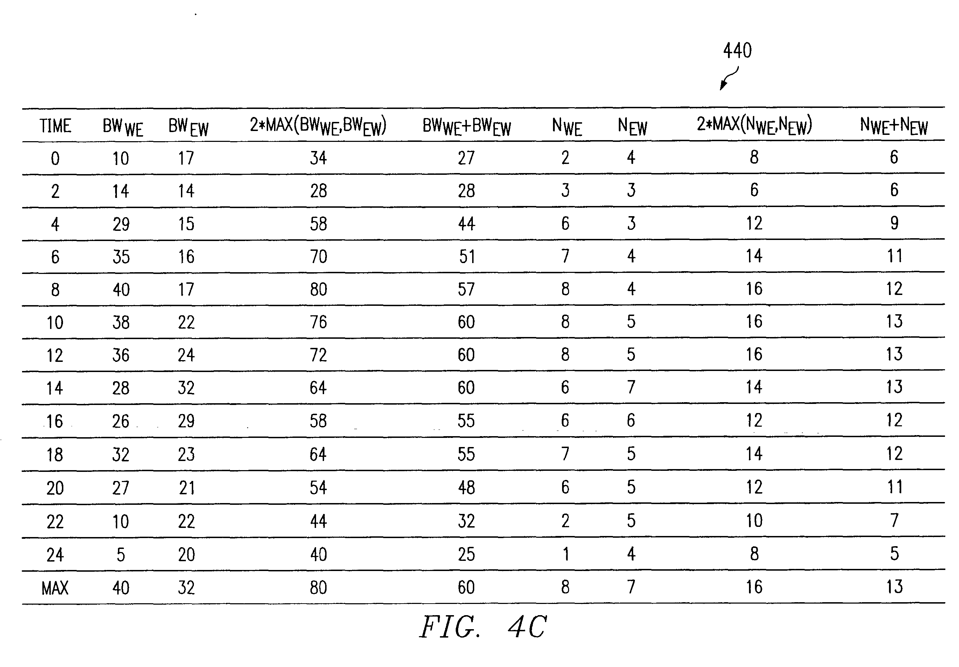

FIGUREs 4A, 4B and 4C illustrate an example of the linear efficiency gains resulting from active directionality wavelength management according to the teachings of the present invention. FIGUREs 4A, 4B and 4C are based on real traffic data measured from the vBNS Network, operated by MCI. Assessment of the super-linear efficiency gains in an optical burst switching configuration, as illustrated in FIGURE 2, though undoubtedly significant, requires complex statistical modeling and is not considered as within the scope of this patent.

Graph 400 of FIGURE 4A shows a measurement of data traffic along a data backbone from the U.S. to the United Kingdom (curve 410) and from the United Kingdom to the U.S (curve 420). The measurements in FIGURE 4A are shown as megabits per second over time. These traffic measurements are stylized into diagram 430 of FIGURE 4B. Stylized FIGURE 4B measurements are translated into table 440 of FIGURE 4C.

FIGURE 4A compares the data traffic flow from the U.K. to the U.S. and from the U.S. to the U.K. over a 24-hour period. The stylized diagram of FIGURE 4B looks at the same link over the same period of time, but shows more of the real traffic flowing in either direction. FIGURE 4B shows the asymmetrical nature of traffic flow, indicating that more traffic is flowing from the U.S. to the U.K. than from the U.K. to the U.S. at most points over the 24-hour period. Curve 450 represents U.S. to U.K. traffic and curve 460 represents U.K. to U.S. traffic flow.

In the example of FIGURE 4B, at midnight there is approximately twice the amount of traffic flowing from the U.S. to the U.K. as from the U.K. to the U.S. because the Europeans are just waking up at this time. At about 9:00 p.m. (2100 hours), FIGURE 4B shows that traffic from the U.K. to the U.S is approximately two to three times more than from the U.S. to U.K. The method and system of the present invention aims to reflect actual data traffic patterns into the provisioning of links 303 between nodes in a network. Curve 470 represents the number of channels a typical current provisioning system would require to carry the traffic flow of FIGUREs 4A and 4B. Curve 480 represents the number of channels needed to carry the same traffic density using the teachings of this invention, as discussed below.

Assuming that a single channel can carry five units of traffic, and assuming the bandwidth requirements (in units) expressed in FIGURE 4A, the following conclusions are found:
□ the maximum bandwidth allocation US-to-UK is approx. 40 units, requiring 8 channels
□ the maximum bandwidth allocation UK-to-US is approx. 26 units, requiring 6 channels
□ the maximum sum of bi-directional bandwidth allocation is approx. 65 units, requiring 13 channels.

Hence,
□ We would classically dimension a symmetric channel allocation scheme to require 2 * max (US-to-UK, UK-to-US) = 2 * max(8,6) = 16 channels, i.e. 8 in each direction
□ However, we would dimension a system with dynamic channel directionality allocation to require max (US-to-UK) + max (UK-to-US) = 13 channels

This yields a saving of 3 channels (= 18.75%), assuming a switchover of two channels during the course of the day.

FIGURE 4C is a graph representing the information stylized from FIGUREs 4A and 4B and discussed above. The results of this example illustrate that the classical approach (which requires determining the maximum data traffic at any point in time to determine the maximum capacity required in a link 303) requires the symmetrical allocation of two times the maximum traffic. However, a system using dynamic channel directionality allocation according to the teachings of this invention can instead allocate the number of data channels necessary to carry the *sum* of data traffic going in both directions. This results in this example, in a savings of three data channels, as shown above. Different implementations of the present invention can provide greater or lesser channel savings.

The method and system of the present invention can thus permit the same volume of data traffic to be carried over a link using less data channels, or permit the carrying of greater amounts of data traffic using the same number of data channels. A network implementing the present invention thus can provide a transmission system that can carry the same traffic volume as a larger system using a smaller number of channel resources and reallocating them over time.

The present invention takes into account basic rules of conservation, i.e., typically, the amount of traffic going into a node must be the same as that coming out of the node. By reallocating the directionality of data channels on a given link, prejudicial effects can occur on the other links within a network system. The traffic flow into a given node could be increased, resulting in the required reconfiguration of links exiting the node to ensure that the added traffic can flow out of the node. The present invention can be implemented on a link-by-link basis, but can also be implemented using an optimization scheme that accounts for all of the traffic flows in a network to decide which channels within which links to reconfigure to optimize data traffic flow.

Some limitations of the present invention include:
□ The optional directionality for a subset of channels results in the need for more optical components, as either end of each of the N^{bidir} channels will have to be terminated with both receivers and transmitters, in addition to the need for the necessary directionality switches (e.g. circulators)
□ The cross-talk effects and other non-linearities resulting from simultaneous bi-directional transmission on difference wavelengths within the same fiber may somewhat impair transmission quality
□ Optimal repartition of the channels directionality will be the result of a fairly complex control algorithm, which takes as its prime input actual or expected levels of bandwidth requirements in either direction. This, and the loss of capacity due to the overhead of the control channel, results in an added cost which needs to be offset by expected efficiency improvements on data channel utilization.
□ The dynamics of the direction switchover process, typically involving a latency period in which the targeted channels may not be used in either direction, negatively impact the availability and capacity of the global transmission system. It is therefore expected that these switchovers will occur at a relatively low frequency in order to limit this negative impact.

The present invention can comprise many individual technology components that are well known in the art. For example, directionality switches can be circulators used to alter the directionality of individual channel transmission. Further, existing optical electronic systems necessary to process the signaling information and to connect it through optical DWDM transmission systems, can be used in this invention. The software systems, necessary for implementing the control logic and protocol engines, necessary to reliably exchange and process directionality switchover signaling PDUs (protocol data units), the electronic controllers for optical receivers and transmitters and other components are also well known to those in the art.

Although the present invention has been described in detail, it should be understood that various changes, substitutions and alterations can be made hereto without departing from the spirit and scope of the invention as described by the appended claims.

## Claims

1. A system for wavelength allocation on a network link, the link comprising one or more fibers, connected to at least one node, and having one or more data channel groups, each having at least one channel, comprising:
a bi-directional data channel group for carrying traffic data along said link;
a bi-directional control channel group for carrying signaling information, further comprising at least one meta-control channel in each direction of said link for exchanging bootstrap information;
a directionality control unit at each end of said link for receiving information from neighbor nodes and determining the initial configuration of channels within said bi-directional channel groups;
a traffic measuring module at each link end for measuring traffic intensity on said link and generating a link traffic signal;
a channel control system at each link end for processing said link traffic signal and said neighbor node information, and for reallocating said bi-directional data and control channel groups based on said processing;
a signaling module for processing said signaling information exchanged between nodes; and
at least one transmitter and receiver pair for each data and control channel to enable communication between the ends of said link.

2. The system of Claim 1, further comprising a first fixed data channel group for carrying data in a first direction along said link.

3. The system of Claim 2, further comprising a second fixed data channel group for carrying data in a second direction along said link, wherein said first and said second directions are different.

4. The system of Claim 3, wherein said signaling information is carried along said first and second fixed data channel groups, using a subcarrier technique.

5. The system of Claim 1, further comprising a first fixed control channel group for carrying signaling information in a first direction along said link.

6. The system of Claim 5, further comprising a second fixed control channel group for carrying signaling information in a second direction along said link, wherein said first and said second directions are different.

7. The system of Claim 6, wherein said traffic measurement comprises measuring the traffic intensity along all control channels allocated in an outbound direction from said node.

8. The system of Claim 1, wherein said signaling information is carried along said bi-directional data channels using a subcarrier technique.

9. The system of Claim 1, wherein said channel control system further comprises a directionality switch at each end of each channel of said bi-directional control channel group and said bi-directional data channel group, for switching the directionality of said channels.

10. The system of Claim 9, wherein said directionality switches are circulators.

11. The system of Claim 1, wherein the channels of said channel groups are each mapped to a different wavelength, and wherein said wavelengths are mapped onto a single fiber.

12. The system of Claim 1, wherein:
the channels of said channel groups are each mapped to a wavelength;
said wavelengths can be mapped onto two or more different fibers; and
more than one channel can be mapped to the same wavelength, so long as there are no duplicate wavelengths on any one fiber.

13. The system of Claim 1, wherein said channels in said data and control channel groups can be mapped onto wavelengths in a fiber such that data can be carried in either direction along said fiber.

14. The system of Claim 1, wherein said channel control system further comprises an algorithm for processing said link traffic signal and said neighbor node information to determine if a channel reallocation is needed, and to perform said reallocation.

15. The system of Claim 14, wherein said algorithm is a hysterisis algorithm.

16. The system of Claim 1, wherein said traffic measurement comprises measuring the traffic intensity along the channels of said bi-directional control channel group allocated in an outbound direction from said node.

17. The system of Claim 1, wherein said neighbor node information comprises a neighbor node outbound data traffic measurement equal to the inbound data traffic of said at least one node.

18. The system of Claim 17, wherein processing said link traffic signal and said neighbor node information comprises comparing said link traffic signal to said neighbor node outbound data traffic measurement to determine if a threshold difference between inbound and outbound data traffic exists.

19. The system of Claim 18, wherein said threshold is an arbitrary value.

20. The system of Claim 19, wherein said arbitrary value is the capacity of a single data channel.

21. The system of Claim 1, wherein said reallocation comprises allocating additional data and/or control channels to the direction of greater traffic flow.

22. The system of Claim 20, wherein said data and control channels are reallocated in an inverse relationship.

23. The system of Claim 1, wherein said neighbor node information comprises signaling information and bootstrap information.

24. The system of Claim 1, wherein the directionality of the channels in said bi-directional data and control channel groups are allocated in an asymmetrical manner.

25. The system of Claim 1, wherein the directionality of the channels in said bi-directional data and control channel groups are reallocated to match data traffic levels in either direction along said link.

26. The system of Claim 1, wherein said initial configuration comprises allocating the number and direction of the channels in said bi-directional data and control channel groups

27. The system of Claim 1, wherein said bi-directional data and control channel groups can each have channels simultaneously allocated in either direction along said link.

28. The system of Claim 1, wherein said link is a WDM link.

29. The system of Claim 1, wherein said link is a D-WDM link.

30. The system of Claim 1, wherein reallocation comprises reallocating the channel configuration of said bi-directional data and control channel groups to reflect the shifting asymmetric data traffic flow measured by said traffic measurement module.

31. The system of Claim 1, wherein said node is a optical burst switch.

32. The system of claim 1, wherein said network is an optical burst switching network.

33. The system of Claim 1, wherein each bi-directional channel is terminated by both a receiver and transmitter on each end.

34. The system of Claim 1, wherein said reallocation is performed on a link-by-link basis.

35. The system of Claim 1, wherein said initial allocation is random.

36. The system of Claim 1, wherein said control units at each link end cooperate to perform said reallocation.

37. The system of Claim 1, wherein said system is contained within an optical switch.

38. The system of Claim 1, further comprising a switching matrix and switch control system.

39. A method for dynamic wavelength allocation on a network link, the link comprising one or more fibers, connected to at least one node, and having one or more data channel groups, each having at least one channel, comprising the steps of:
exchanging bootstrap information between directionality control units at each end of said link to determine the initial configuration of channels within a bi-directional data channel group and a bi-directional control channel group;
negotiating at said directionality control units the initial directionality of said channels in said bi-directional channel groups;
measuring traffic intensity on said link at a traffic measuring module at each link end to generate a link traffic signal and forwarding said link traffic signal to a channel control system;
receiving at said directionality control units information from neighbor nodes;
processing said link traffic signal and said neighbor node information, at said directionality control unit at each link end;
at said channel control system, reallocating the directionality of one or more channels in said bi-directional data and control channel groups based on said processing; and
repeating said measuring, receiving, processing and reallocating steps continuously to control data and control channel group capacity in each direction along said link.

40. The method of Claim 37, further comprising a first fixed data channel group for carrying data in a first direction along said link.

41. The method of Claim 38, further comprising a second fixed data channel group for carrying data in a second direction along said link, wherein said first and said second directions are different.

42. The method of Claim 39, wherein said neighbor node information is carried along said first and second fixed data channel groups using a subcarrier technique.

43. The method of Claim 37, further comprising a first fixed control channel group for carrying signaling protocol information in a first direction along said link.

44. The method of Claim 41, further comprising a second fixed control channel group for carrying signaling protocol information in a second direction along said link, wherein said first and said second directions are different.

45. The method of Claim 42, wherein said traffic measurement comprises measuring the traffic intensity along all control channels allocated in an outbound direction from said node.

46. The method of Claim 37, wherein said neighbor node information is carried along said bi-directional data channels using a subcarrier technique.

47. The method of Claim 37, wherein said channel control system further comprises:
a signaling module for processing signaling protocol information received from said directionality control unit; and
a directionality switch at each end of each channel of said bi-directional control channel group and said bi-directional data channel group, for switching the directionality of said channels.

48. The method of Claim 45, wherein said directionality switches are circulators.

49. The method of Claim 37, wherein said link further comprises a meta-control channel in each direction along said link to carry said bootstrap information.

50. The method of Claim 47, wherein said bootstrap information comprises protocol data units.

51. The method of Claim 37, wherein the channels of said channel groups are each mapped to a different wavelength, and wherein said wavelengths are mapped onto a single fiber.

52. The method of Claim 37, wherein:
the channels of said channel groups are each mapped to a wavelength;
said wavelengths can be mapped onto two or more different fibers; and
more than one channel can be mapped to the same wavelength, so long as there are no duplicate wavelengths on any one fiber.

53. The method of Claim 37, wherein said channels in said data and control channel groups can be mapped onto wavelengths in a fiber such that data can be carried in either direction along said fiber.

54. The method of Claim 37, wherein said initial configuration comprises the identification and number of channels in said bi-directional data and control channel groups.

55. The method of Claim 37, wherein said directionality control unit further comprises an algorithm for processing said link traffic signal and said neighbor node information to determine if a channel reallocation is needed, and to perform said reallocation.

56. The method of Claim 37, wherein said traffic measurement comprises measuring the traffic intensity along the channels of said bi-directional control channel group allocated in an outbound direction from said node.

57. The method of Claim 37, wherein said neighbor node information comprises a neighbor node outbound data traffic measurement equal to the inbound data traffic of said at least one node.

58. The method of Claim 37, wherein processing said link traffic signal and said neighbor node information comprises comparing said link traffic signal to said neighbor node outbound data traffic measurement to determine if a threshold difference between inbound and outbound data traffic exists.

59. The method of Claim 56, wherein said threshold is an arbitrary value.

60. The method of Claim 57, wherein said arbitrary value is the capacity of a single data channel.

61. The method of Claim 37, wherein said reallocation comprises allocating additional data and/or control channels to the direction of greater traffic flow.

62. The method of Claim 59, wherein said data and control channels are reallocated in an inverse relationship.

63. The method of Claim 37, wherein said neighbor node information comprises signaling information and bootstrap information.

64. The method of Claim 37, wherein the directionality of the channels in said bi-directional data and control channel groups are allocated in an asymmetrical manner.

65. The method of Claim 37, wherein the directionality of the channels in said bi-directional data and control channel groups are reallocated to match data traffic levels in either direction along said link.

66. The method of Claim 37, wherein said bi-directional data and control channel groups can each have channels simultaneously allocated in either direction along said link.

67. The method of Claim 37, wherein said link is a WDM link.

68. The method of Claim 37, wherein said link is a D-WDM link.

69. The method of Claim 37, wherein reallocation comprises reallocating the channel configuration of said bi-directional data and control channel groups to reflect the shifting asymmetric data traffic flow measured by said traffic measurement module.

70. The method of Claim 37, wherein said network is an optical burst switching network.

71. The method of Claim 37, wherein each bi-directional channel is terminated by both a receiver and transmitter on each end.

72. The method of Claim 37, wherein said reallocation is performed on a link-by-link basis.

73. The method of Claim 37, wherein said initial allocation is random.

74. The method of Claim 37, wherein said control units at each link end cooperate to perform said reallocation.
